# DEMANDE DE BREVET EUROPEEN

(11) **EP 2 172 815 A1**
(43) Date de publication de la demande: **07.04.2010**
(21) Numéro de dépôt: 08165751.2
(22) Date de dépôt: 02.10.2008
(51) Int. Cl.: G04B 13/02, G04B 17/28, G04B 19/02, F16H 55/17, G04B 35/00

(54) **Rouage d'horlogerie**

(71) Demandeur: MONTRES BREGUET S.A., 1344 L'Abbaye (CH); Blancpain S.A., 1348 Le Brassus (CH)
(72) Inventeur: Goeller, Eric, 25370, Les Hôpitaux Vieux (FR); Calabrese, Vincent, 1006, Lausanne (CH)
(74) Mandataire: Ravenel, Thierry Gérard Louis

(57) **Abrégé**

Rouage d'horlogerie comportant au moins une paire d' éléments dentés circulaires (25,31) à axes parallèles, ces éléments étant pourvus de dentures respectives mutuellement engrenées pour que l'un (25) des éléments entraîne l'autre. Afin d'améliorer les conditions de transmission dans l'engrenage sans réduire le module des dentures, les dentures correspondantes de chacun des deux éléments sont multiples, chacune d'elles se composant de N anneaux dentés (28a,28b;30a,30b) coaxiaux et décalés angulairement entre eux d'une fraction du pas de la denture. Dans la version la plus simple, chacune des dites dentures est double (N=2), ses deux anneaux étant décalés angulairement d'un demi-pas. L'invention permet d'éviter l'engrènement dans des zones situées relativement loin de la ligne reliant les centres des éléments dentés, permettant ainsi de réduire les variations de couple et de vitesse au cours d'une menée de dent. Des applications sont prévues en particulier dans un rouage de finissage, un rouage d'affichage et un échappement tournant tel qu'un tourbillon.

## Description

### Arrière-plan de l'invention

La présente invention concerne un rouage d'horlogerie comportant au moins une paire d'éléments dentés circulaires à axes parallèles, ces éléments dentés étant pourvus de dentures respectives mutuellement engrenées. L'invention s'applique en particulier à des paires de mobiles rotatifs du rouage dit de finissage, qui relie l'organe moteur d'un mouvement d'horlogerie mécanique à l'organe réglant, en particulier au mobile d'échappement de celui-ci. Toutefois l'invention peut trouver d'autres applications en horlogerie, par exemple dans un rouage d'affichage.

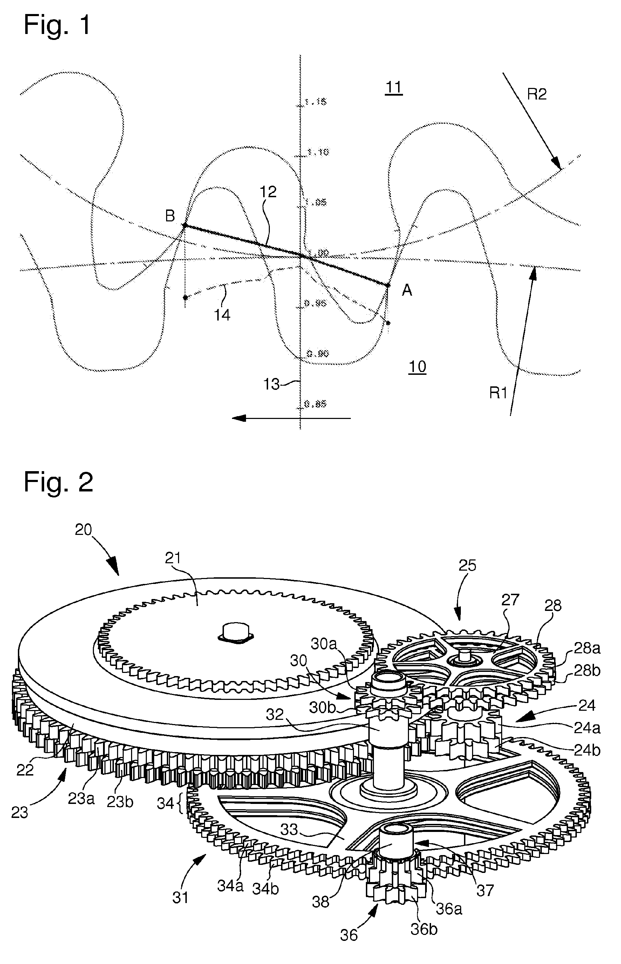

Dans les engrenages en général et notamment dans un engrenage à dentures droites, le point de contact entre les profils conjugués des flancs des deux dents qui se touchent se déplace radialement au cours d'une menée de dent, en montant vers la tête de la dent menante. Ce phénomène est illustré schématiquement dans la figure 1 annexée, qui montre l'engrènement d'une roue menante 10 à quatre-vingt-deux dents et de rayon primitif R1 avec une roue menée 11 à douze dents et de rayon primitif R2, la flèche indiquant le sens de rotation. Le lieu géométrique des points de contact, appelé ligne d'engrènement 12 (ou ligne d'action de l'engrenage), s'étend du point A au point B et traverse les deux cercles primitifs des dentures au voisinage de la ligne des centres 13 reliant les centres des deux roues. Il en résulte qu'au cours d'une menée de dent, le rapport des couples (représenté par la courbe 14 en regard de l'échelle verticale centrale) varie, ainsi que celui des vitesses. On comprend aisément que la variation de la distance au centre entre A et B est proportionnellement beaucoup plus forte sur la roue 11 de petit rayon que sur la roue 10, de sorte qu'un couple constant sur la roue 10 produira un couple nettement variable sur la roue 11. D'autre part, le rendement de transmission varie aussi, en étant généralement moins bon quand le point de contact est éloigné de la ligne des centres. Si en outre le profil présente là des irrégularités, les défauts de transmission résultants sont plus marqués que dans la région centrale de la ligne d'engrènement.

Dans le rouage de finissage d'un mouvement d'horlogerie, en particulier sur les mobiles proches de l'organe moteur, les modules des engrenages doivent être relativement grands à cause des forces élevées, et de ce fait le pas angulaire l'est également. Pour les raisons évoquées ci-dessus, un engrenage à gros module présente une régularité de transmission nettement plus mauvaise qu'un engrenage à petit module avec un grand nombre de dents. De plus, la faible vitesse de la partie amont du rouage de finissage amplifie l'effet de ce défaut sur l'isochronisme.

La variation du couple au cours d'une menée de dent est un défaut, mais la variation de vitesse angulaire en est un aussi. Par exemple dans un rouage d'affichage, un passage de dent s'accompagne d'une variation de vitesse d'une aiguille de l'affichage et cette variation peut être notable si l'engrenage considéré est lent. D'autre part, les modules des rouages d'affichage sont souvent grands, en raison de la moindre précision des pivots que dans un rouage de finissage, et il en résulte les inconvénients mentionnés ci-dessus.

La présence d'un ébat (ou jeu circonférentiel) relativement grand dans les engrenages horlogers, pour diverses raisons de fabrication et de montage, est un facteur aggravant puisqu'elle conduit à une augmentation du module. Une autre particularité des engrenages horlogers est que, du fait de la petite taille des éléments, la précision du centrage et celle de la forme des dents ne sont pas toujours aussi bonnes que dans d'autres mécanismes.

Afin de réduire les inconvénients précités, il est prévu dans le brevet CH 244641 de corriger les profils de dents, en s'écartant du profil normal en développante de façon à rendre plus uniforme la valeur de la force transmise d'une dent à l'autre. D'autres solutions consistant à corriger les profils des dents sont mentionnées dans le brevet CH 318895. Toutefois elles ne permettent pas d'échapper à la principale condition défavorable, à savoir que plus la ligne d'engrènement s'étend loin de la ligne des centres, plus certaines parties de cette ligne s'éloignent des cercles primitifs, comme c'est le cas au voisinage des points A et B dans la figure 1.

Théoriquement, il serait possible de réduire la longueur de la ligne d'engrènement 12 en augmentant le nombre de dents, réduisant ainsi le module et le pas de la denture. Cependant, il en résulterait une diminution d'épaisseur des dents qui n'est pas admissible, notamment dans la partie lente et fortement sollicitée du rouage de finissage d'un mouvement d'horlogerie mécanique. En outre, une telle augmentation sur les mobiles ayant déjà un grand nombre de dents rendrait très difficile, voire impossible, l'usinage de la denture.

### Résumé de l'invention

La présente invention vise à perfectionner un rouage d'horlogerie de manière à remédier dans une mesure substantielle aux inconvénients susmentionnés des engrenages habituellement utilisés dans le domaine, en permettant de rendre plus uniforme la transmission du couple et/ou de la vitesse, sans affaiblir les dents et sans compliquer outre mesure la fabrication et le montage.

A cet effet, il est prévu un rouage d'horlogerie du genre indiqué en préambule ci-dessus, **caractérisé en ce que** lesdites dentures de chacun des deux éléments dentés sont multiples, chacune d'elles se composant de N anneaux dentés coaxiaux et décalés angulairement entre eux d'une fraction du pas de la denture. Dans la plupart des applications, il suffit que chacune des dentures des deux éléments dentés soit double (N=2), ses deux anneaux étant décalés angulairement d'un demi-pas, mais l'utilisation de dentures triples décalées d'un tiers de pas pourrait aussi être envisageable dans certains cas, par exemple dans de grosses pièces d'horlogerie.

Grâce à un tel agencement, les N anneaux dentés de chaque denture agissent l'un après l'autre. Pour un même module de denture, la longueur de la ligne d'engrènement est divisée par N et cette ligne reste cantonnée au voisinage de la ligne des centres, c'est-à-dire dans la zone où le profil de chaque dent peut plus facilement être optimal et où les conditions d'engrènement sont les plus favorables, en particulier en présentant une faible variation des rayons au cours d'une menée de dent. Il en résulte que les rapports des couples et des vitesses sont beaucoup plus uniformes qu'avec des dentures simples, même avec les profils de dents habituels en horlogerie. En évitant le contact entre dents dans des zones éloignées de la ligne des centres, où souvent le profil n'est pas optimal et les pressions hertziennes sont plus élevées, l'engrenage a un meilleur rendement et subit moins d'usure. On cumule ainsi les avantages des dentures à grand module et ceux des dentures à grand nombre de dents, en évitant largement leurs inconvénients spécifiques. D'autre part, le coût de fabrication supplémentaire se limite à la multiplication de certains éléments, sans que ceux-ci soient plus difficiles à fabriquer.

D'autres particularités et avantages de l'invention apparaîtront ci-dessous dans la description de deux modes de réalisation avantageux, présentés à titre d'exemples non limitatifs en référence aux dessins annexés.

### Description sommaire des dessins

La figure 1 représente schématiquement l'engrènement de deux roues d'horlogerie classiques à dentures droites.

La figure 2 est une vue schématique en perspective représentant un premier mode de réalisation de l'invention sur une partie du rouage de finissage d'une montre, à partir du barillet.

La figure 3 est une vue en plan schématique de l'objet de la figure 2.
La figure 4 est une vue agrandie du détail IV de la figure 3.
La figure 5 est une vue en coupe suivant la ligne V-V de la figure 3.

La figure 6 est une vue partielle du dessous d'un tourbillon de montre, représentant un second mode de réalisation de l'invention.
La figure 7 est une vue agrandie d'une partie de la figure 6.

### Description détaillée de modes de réalisation de l'invention

Dans les figures 2 à 5, on reconnaît le barillet à ressort 20 d'un mouvement de montre, comportant un rochet 21 et un tambour rotatif 22 dont la paroi périphérique est munie d'une denture droite 23 s'engrenant sur un pignon 24 d'un mobile de huitaine 25. Le mobile 25 comprend en outre un arbre 26 et une roue de huitaine 27. La denture 28 de la roue de huitaine s'engrène sur un pignon 30 d'un mobile de centre 31 comprenant en outre un arbre tubulaire 32 et une roue de centre 33. La denture 34 de la roue de centre s'engrène sur un pignon 36 d'un mobile de moyenne 37 comprenant en outre un arbre tubulaire 38 et une roue moyenne 39, laquelle est omise dans la figure 2 pour clarifier le dessin. Ces mobiles forment la partie amont du rouage de finissage de la montre, dont la partie aval transmet le mouvement de la roue moyenne 39 à l'organe réglant. Afin de clarifier les dessins, on n'a pas représenté les éléments qui supportent les mobiles rotatifs décrits.

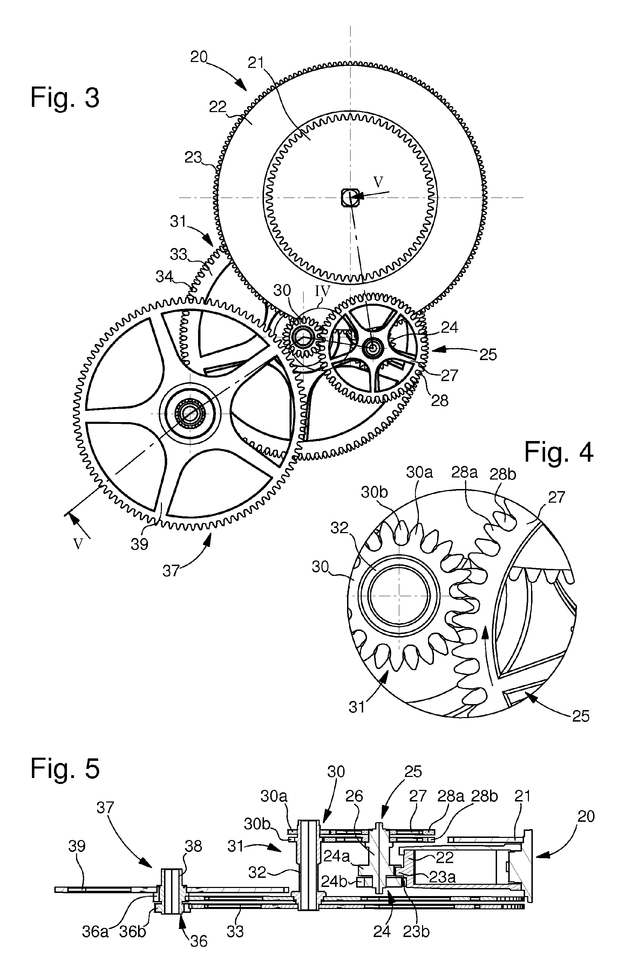

Conformément au principe de l'invention exposée plus haut, chacune des dentures menantes 23, 28 et 34 et des dentures des pignons menés 24, 30 et 36 est double: elle se compose de deux anneaux dentés coaxiaux et superposés 23a et 23b, 24a et 24b, 28a et 28b, 30a et 30b, 34a et 34b, 36a et 36b. Les dents des deux anneaux d'une denture sont identiques, mais celles du second anneau sont décalées angulairement de la moitié du pas de la denture par rapport à celles du second anneau. Ainsi, comme on le voit en plan dans la figure 4, chaque dent de la denture supérieure 27a de la roue 27 se situe exactement au milieu entre deux dents de la denture inférieure 27b, et chaque dent de la denture supérieure 30a du pignon 30 se situe exactement au milieu entre deux dents de la denture inférieure 30b de ce pignon. Pour simplifier, on qualifiera une telle denture de « duplex » dans la suite de cet exposé.

Dans l'exemple des figures 2 à 5, l'inventeur estime que le surcoût de construction résultant des dentures duplex ne se justifie que sur les mobiles les plus lents du rouage, où les forces sont grandes, c'est pourquoi cette solution n'est pas appliquée sur la roue moyenne 39 ni en aval, où les variations précitées sont lissées à cause de la rapidité de rotation. On pourrait même envisager, dans une exécution au moindre coût, de limiter l'utilisation des dentures duplex au premier étage d'engrenage, c'est-à-dire entre le barillet 20 et le mobile de huitaine 25.

Dans les dentures duplex décrites ici, il est commode et avantageux de réaliser les deux anneaux dentés sous forme de pièces distinctes, afin de tailler leurs profils dentés séparément. Le terme d'anneau utilisé ici ne désigne pas forcément une pièce séparée : par exemple, on voit dans la figure 5 que l'anneau denté 23a du barillet fait partie intégrante du tambour 22, comme d'habitude, tandis que le second anneau denté 23b est fabriqué séparément, puis chassé sur le tambour. Bien entendu, un positionnement angulaire précis du second anneau par rapport au premier doit être assuré par des éléments d'emboîtement appropriés ou à l'aide de gabarits extérieurs lors de l'assemblage.

Dans le pignon de huitaine 24, l'anneau denté supérieur 24a fait partie intégrante de l'arbre 26 et est usiné directement sur lui, tandis que l'anneau denté inférieur 24b est une pièce rapportée, usinée séparément puis chassée sur l'arbre. Par contre, la roue de huitaine 27 est réalisée par superposition de deux planches semblables dont les jantes forment les anneaux dentés 27a et 27b. Ces deux roues peuvent être chassées sur l'arbre 26 soit l'une après l'autre, soit ensemble après avoir été préalablement assemblées pour présenter le déphasage mutuel voulu. Une construction similaire est prévue pour le mobile de centre 31. Au besoin, les deux roues superposées formant une denture duplex pourraient être équipées d'un dispositif de réglage fin du déphasage.

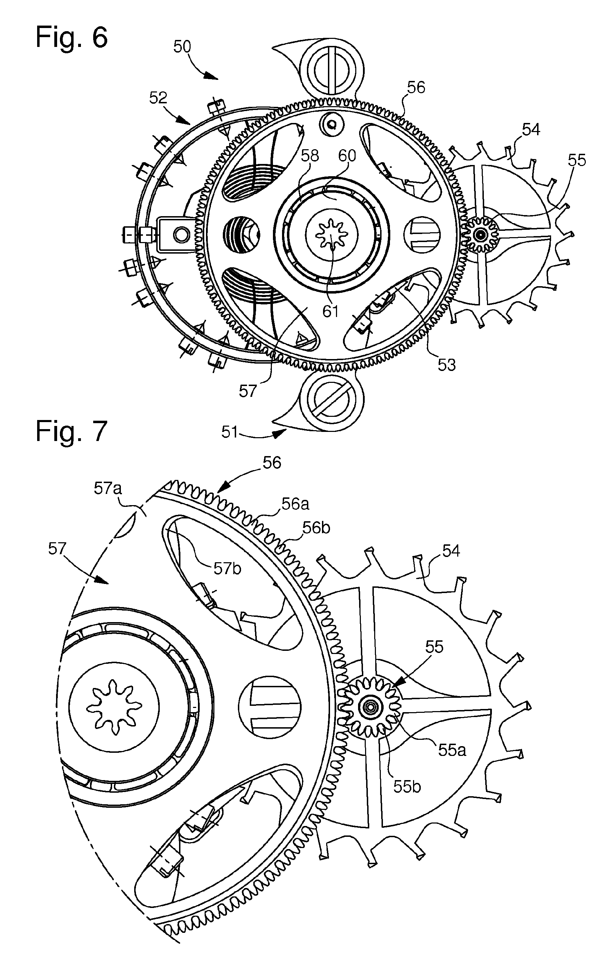

Les figures 6 et 7 illustrent la mise en oeuvre de l'invention dans un mouvement d'horlogerie à échappement tournant, en l'occurrence un tourbillon 50. La cage 51 du tourbillon 50, qui est du type volant et fait un tour par minute, porte comme d'habitude un oscillateur 52 à balancier et spiral et un échappement comprenant une ancre 53 et une roue d'échappement 54 solidaire d'un pignon d'échappement 55. Dans les dessins, le pont supportant le pivot du pignon 55 est omis pour des raisons de clarté. Ce pignon s'engrène sur la denture 56 d'une roue fixe 57 qui supporte par un roulement à billes 58 l'unique pivot 60 de la cage 51. Comme d'habitude, le pivot 60 est muni du pignon d'entraînement 61 du tourbillon, entraîné par le rouage de finissage.

Comme on le voit plus en détails dans la figure 7, la denture du pignon d'échappement 55 et la denture 56 de la roue fixe 57 sont du type duplex décrit plus haut, chacune d'elle se composant d'une paire d'anneaux dentés 55a et 55b, 56a et 56b, mutuellement déphasés d'un demi-pas de la denture. L'anneau 55b du pignon 55 peut être réalisé comme d'habitude sur l'arbre du mobile d'échappement, tandis que l'anneau 55a est de préférence constitué par une pièce séparée, chassée sur cet arbre. Par contre, la roue fixe 57 est formée dans cet exemple par assemblage de deux roues superposées, comportant des planches respectives 57a et 57b et les anneaux dentés respectifs 56a et 56b. Le décalage angulaire précis entre les deux anneaux dentés est maintenu par au moins une goupille (non représentée) engagée dans des trous forés avec une grande précision dans les planches 57a et 57b.

L'utilisation de dentures multiples, notamment duplex, dans un échappement tournant et en particulier un tourbillon présente les avantages généraux déjà exposés plus haut et en outre des avantages particuliers. Le jeu radial de la cage 51 du tourbillon, qui est de l'ordre du centième de millimètre, offre au pignon d'échappement 55 une certaine liberté de déplacement radial par rapport à la denture fixe 56. Un éventuel défaut de centrage de la cage ou du mobile d'échappement accroît encore ce déplacement. Les variations de couple et de vitesse qui peuvent en résulter affectent directement l'uniformité de l'énergie que la roue d'échappement transmet à l'oscillateur par chaque impulsion. Si le pignon d'échappement n'a ordinairement que 11 dents alors que la roue d'échappement 54 en a 20, on comprend bien que les impulsions données par deux dents successives de la roue 54 correspondent à deux positions bien différentes d'une même dent du pignon et peuvent donc différer nettement à cause des variations de couple expliquées en référence à la figure 1. Rappelons que ces variations sont plus marquées dans les parties extrêmes de la ligne d'engrènement 12, près des points A et B dans la figure 1. En supprimant ces parties extrêmes, l'utilisation de dentures multiples réduit fortement les variations de l'énergie des impulsions dans le tourbillon. Un autre avantage de l'invention dans cette application est dû au très petit diamètre du pignon d'échappement 55 à 11 dents, s'engrenant sur la grande roue fixe 57 à 99 dents. Compte tenu des conditions de fonctionnement d'une montre, ces dimensions sont à la limite du réalisable mécaniquement. L'utilisation de dentures duplex permet d'améliorer le fonctionnement autant que si l'on avait doublé ces nombres de dents, pratiquement sans aucune concession au point de vue de la construction.

Le second mode de réalisation illustré par les figures 6 et 7 peut être complété par l'utilisation de dentures multiples (notamment duplex) sur le pignon d'entraînement 61 du tourbillon et sur la roue qui l'entraîne, avec pour effet de régulariser le couple appliqué au tourbillon par le ressort moteur. L'invention est utilisable suivant le même principe dans les deux liaisons par engrenage d'un échappement tournant du type carrousel. En outre, on peut évidemment combiner le mode de réalisation décrit ici avec le premier, par exemple sous la forme illustrée par les figures 2 à 5 ou sous une forme plus simple.

On notera enfin que de manière avantageuse, les roues formant la denture duplex peuvent être réalisées, par exemple en une seule pièce, en silicium et/ou en métal par les technologies classiques de photolithographie et gravage et/ou en combinaison avec la technologie LIGA. On notera que la réalisation de ces roues duplex en une seule pièce permet outre de réaliser la fabrication de manière précise et aisée, d'obtenir un indexage parfait entre les deux dentures.

## Revendications

1. Rouage d'horlogerie comportant au moins une paire d'éléments dentés circulaires (20, 25, 31, 37, 55, 57) à axes parallèles, ces éléments dentés étant pourvus de dentures respectives mutuellement engrenées,
**caractérisé en ce que** lesdites dentures (23, 24, 28, 30, 34, 36, 56) de chacun des deux éléments dentés sont multiples, chacune d'elles se composant de N anneaux dentés (23a, 23b; 24a, 24b; 28a, 28b; 30a, 30b; 34a, 34b; 36a, 36b; 55a, 55b; 56a, 56b) coaxiaux et décalés angulairement entre eux d'une fraction du pas de la denture.

2. Rouage d'horlogerie selon la revendication 1, **caractérisé en ce que** chacune des dites dentures est double (N=2), ses deux anneaux dentés étant décalés angulairement d'un demi-pas.

3. Rouage d'horlogerie selon la revendication 2, **caractérisé en ce que** la denture double d'un élément denté sous forme de pignon (24, 30, 55) comprend un premier anneau denté (24a, 30b, 55b) faisant partie intégrante d'un arbre (26, 32) de l'élément denté et un second anneau denté (24b, 30a, 55a) formé par une pièce rapportée.

4. Rouage d'horlogerie selon la revendication 2, **caractérisé en ce qu'**un élément denté sous forme de roue (27, 33, 57) à denture double est formé par superposition de deux planches semblables (57a, 57b), pourvues des dits anneaux dentés.

5. Rouage d'horlogerie selon la revendication 2, **caractérisé en ce que** la denture double d'un élément denté sous forme de barillet (20) comprend un premier anneau denté (23a) faisant partie intégrante d'un tambour (22) du barillet et un second anneau denté (23b) formé par une pièce rapportée.

6. Rouage d'horlogerie selon l'une des revendications précédentes, **caractérisé en ce que** l'une des paires d'éléments dentés comprend le pignon d'échappement (55) d'un tourbillon (50) et la roue fixe (57) dudit tourbillon.

7. Rouage d'horlogerie selon la revendication 6, **caractérisé en ce qu'**une autre des paires d'éléments dentés comprend le pignon d'entraînement (61) de la cage du tourbillon (50).
